# EUROPÄISCHE PATENTANMELDUNG

(11) **EP 3 971 775 A1**
(43) Veröffentlichungstag der Anmeldung: **23.03.2022**
(21) Anmeldenummer: 21189022.3
(22) Anmeldetag: 02.08.2021
(51) Int. Cl.: G06K 9/62, G06V 20/56

(54) **VERFAHREN ZUR BESTIMMUNG EINES VON EINER BETRIEBSSITUATION EINER LANDWIRTSCHAFTLICHEN ARBEITSMASCHINE ABHÄNGIGEN BETRIEBSPARAMETERS ALS KLASSIFIZIERUNGSAUFGABE**

(30) Priorität: 16.09.2020 DE 102020124201; 28.06.2021 DE 102021116566
(71) Anmelder: CLAAS Selbstfahrende Erntemaschinen GmbH, 33428 Harsewinkel (DE)
(72) Erfinder: Fischer, Frédéric, 59759 Arnsberg (DE); Witte, Johann, 58730 Fröndenberg (DE); Kettelhoit, Boris, 33335 Gütersloh (DE); Töniges, Torben, 33602 Bielefeld (DE)
(74) Vertreter: CLAAS Gruppe

(57) **Zusammenfassung**

Die vorliegende Erfindung betrifft ein Verfahren zur Bestimmung eines von einer Betriebssituation einer landwirtschaftlichen Arbeitsmaschine(21), insbesondere selbstfahrenden Erntemaschine (1), abhängigen Betriebsparameters als Klassifizierungsaufgabe, wobei mittels einer Kameraanordnung (22) Bilder (23, 24, 25) zumindest eines Arbeitsbereiches der Arbeitsmaschine (21) aufgenommen und einer mit der Kameraanordnung (22) verbundenen Auswerteeinheit (4) einer Datenverarbeitungsvorrichtung (2) zur Bildanalyse als Eingabedaten zugeführt werden, wobei die Klassifizierungsaufgabe in zumindest zwei Teilklassifikationsaufgaben zerlegt wird, wobei jeder Teilklassifikationsaufgabe ein Klassifikator (27_1, 27_2, ..., 27_n) zugeordnet wird, wobei durch zumindest einen Vorklassifikator (26) die Auswahl des anzuwendenden Klassifikators (27_1, 27_2, ..., 27_n) bestimmt wird.

## Beschreibung

Die vorliegende Erfindung betrifft ein Verfahren zur Bestimmung eines von einer Betriebssituation einer landwirtschaftlichen Arbeitsmaschine, insbesondere einer selbstfahrenden Erntemaschine, abhängigen Betriebsparameters als Klassifizierungsaufgabe gemäß dem Oberbegriff des Anspruches 1. Weiterhin betrifft die Erfindung eine Datenverarbeitungsvorrichtung gemäß dem Oberbegriff des Anspruches 18, eine landwirtschaftliche Arbeitsmaschine gemäß dem Anspruch 20 sowie ein Computerprogrammprodukt gemäß dem Anspruch 22, das einen Computer befähigt, das Verfahren auszuführen.

Fortschritte in der Computertechnik, insbesondere auf dem Gebiet der künstlichen Intelligenz, machen die Automatisierung und Optimierung von Steuerungsprozessen praktikabel, die früher vom Menschen basierend auf Erfahrung und Intuition vorgenommen wurden. Gleichzeitig erfordern solche Steuerungsprozesse einen hohen Aufwand, sowohl bei der Entwicklung als auch beim späteren praktischen Einsatz, insbesondere dann, wenn mehrere nicht ohne weiteres objektivierbare Parameter zu berücksichtigen sind.

So offenbart beispielsweise die EP 2 826 356 B1 einen Mähdrescher mit einer auf einen Erntegutstrom ausgerichteten optischen Sensoreinrichtung zur Aufnahme von Bildserien des durchlaufenden Erntegutstroms, deren Bilder computertechnisch ausgewertet werden, um Bruchkorn und Beimengungen zu erkennen und zu quantifizieren. Die hierfür erforderliche Rechenleistung ist erheblich, und dementsprechend hoch sind die Kosten des zur Auswertung der Bilder benötigten Computersystems.

EP 3 299 995 A1 sieht vor, zur Bildverarbeitung einen Computer zu nutzen, um Anomalien in der Umgebung einer landwirtschaftlichen Arbeitsmaschine zu erkennen und den Betrieb der Arbeitsmaschine, z.B. durch automatisches Umfahren eines erfassten Hindernisses, selektives Bearbeiten oder Nichtbearbeiten von Unkrautbeständen etc. zu effektiver zu gestalten. Auch hier macht die Diversität der möglichen Anomalien, die erkannt und berücksichtigt werden müssen, einen hohen Entwicklungs- und Rechenaufwand notwendig.

Selbstlernende Algorithmen wie etwa neuronale Netze, Deep Learning oder Support Vector Machines versprechen zwar eine Verringerung des Programmieraufwandes bei der Entwicklung, benötigen aber zum Verarbeiten von durch mehrere Parameter beeinflussten Prozessdaten ebenfalls hohe Rechenleistungen. Auch die Menge an Beispieldaten, die zum Trainieren der Algorithmen benötigt wird, sowie die benötigte Lernzeit nehmen mit zunehmender Komplexität des Problems stark zu.

Eine Aufgabe der vorliegenden Erfindung ist es, ein Verfahren zur Bestimmung eines von einer Betriebssituation einer landwirtschaftlichen Arbeitsmaschine, insbesondere selbstfahrenden Erntemaschine, abhängigen Betriebsparameters als Klassifizierungsaufgabe sowie eine Datenverarbeitungsvorrichtung zur Durchführung des Verfahrens bereitzustellen, die kostengünstiger realisierbar sind und die mit geringem Rechenaufwand ein robustes Ergebnis liefern.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe ausgehend vom Oberbegriff des nebengeordneten Anspruchs 18 in Verbindung mit dessen kennzeichnenden Merkmalen. Die hierauf jeweils folgenden, abhängigen Ansprüche geben jeweils vorteilhafte Weiterbildungen der Erfindung wieder.

Gemäß der Erfindung wird ein Verfahren zur Bestimmung eines von einer Betriebssituation einer landwirtschaftlichen Arbeitsmaschine, insbesondere selbstfahrenden Erntemaschine, abhängigen Betriebsparameters als Klassifizierungsaufgabe vorgeschlagen, wobei mittels einer Kameraanordnung Bilder zumindest eines Arbeitsbereiches der Arbeitsmaschine aufgenommen und einer mit der Kameraanordnung verbundenen Auswerteeinheit einer Datenverarbeitungsvorrichtung zur Bildanalyse als Eingabedaten zugeführt werden. Erfindungsgemäß ist vorgesehen, dass die Klassifizierungsaufgabe in zumindest zwei Teilklassifikationsaufgaben zerlegt wird, wobei jeder Teilklassifikationsaufgabe ein Klassifikator zugeordnet wird, wobei durch zumindest einen Vorklassifikator die Auswahl des anzuwendenden Klassifikators bestimmt wird.

Unter einem Vorklassifikator bzw. einem Klassifikator kann hier jede Art von Computersystem oder von auf einem Computersystem ausführbarem Prozess verstanden werden, das/der in der Lage ist, einen Eingabedatensatz sinnvoll in eine von mehreren Kategorien einzuordnen. Diese Einordnung kann anhand von durch einen Programmierer bei der Entwicklung des Klassifikators vorgegebenen Regeln oder als Ergebnis eines Lernprozesses anhand von Beispieldatensätzen, für welche die zugeordnete Kategorie jeweils vorab bekannt ist und zur Überprüfung und Korrektur der Zuordnungsergebnisse des Klassifikators genutzt werden kann, erfolgen. Insbesondere kann ein Klassifikator als neuronales Netz implementiert sein.

Wenn zum Lösen eines gegebenen Klassifikationsproblems ein nicht lernfähiges Programm entwickelt wird, muss das zum Lösen des Problems nötige Wissen vom Programmierer in den Programmtext eingebracht werden. Es liegt auf der Hand, dass der damit verbundene Aufwand umso größer wird, je größer die Zahl der möglichen Klassifikationsergebnisse ist. Im Gegensatz dazu benötigt ein selbstlernendes System wie etwa ein neuronales Netz zwar kein Vorabwissen über das zu lösende Problem, sondern lernt effektiv durch Versuch und Irrtum anhand der Beispieldatensätze. Jedoch ist auch ein solcher Lernvorgang umso langwieriger und sein Erfolg umso ungewisser, je größer die Zahl der möglichen Ergebnisse der Klassifikation ist. Die Erfindung nutzt die Tatsache, dass bei vielen praktischen Klassifizierungsaufgaben die große Zahl möglicher Ergebnisse sich durch Kombinationen von Werten unterschiedlicher Parameter ergibt. Wenn etwa ein erster Parameter n und ein zweiter Parameter m verschiedene Werte annehmen kann, sind bis zu n*m verschiedene Kombinationen möglich. Wenn man hingegen die Klassifizierungsaufgabe in zumindest zwei Teilklassifikationsaufgaben zerlegt, wobei jeder Teilklassifikationsaufgabe ein Klassifikator zugeordnet wird, dann genügt es, wenn durch zumindest einen Vorklassifikator die Auswahl des anzuwendenden Klassifikators der Teilklassifikationsaufgabe bestimmt wird, um zwischen n verschiedenen Fällen zu unterscheiden. Durch den mittels des zumindest einen Vorklassifikators ausgewählten Klassifikators wird dann zwischen den verschiedenen Fällen m differenziert. Dies verringert nicht nur den Rechenaufwand beim Auswerten eines gegebenen Satzes von Prozessdaten, sondern auch den für die Bereitstellung des Programms erforderlichen Entwicklungsaufwand.

Die Kameraanordnung umfasst zumindest eine Kamera, durch welche Bilder erfasst werden. Bevorzugt können mehrere Kameras vorgesehen sein, welche an verschiedenen Stellen innerhalb und/oder außerhalb der landwirtschaftlichen Arbeitsmaschine angeordnet sind, um Bilder zumindest eines Arbeitsbereiches der Arbeitsmaschine aufzunehmen.

Unter dem Begriff Betriebssituation ist ein spezifischer Anwendungsfall zu verstehen, in welchem zur Steuerung oder Regelung zumindest eines Arbeitsaggregates der landwirtschaftlichen Arbeitsmaschine ein von der Betriebssituation abhängiger Betriebsparameter als Regelgröße bestimmt werden muss.

Insbesondere können der zumindest eine Vorklassifikator und der zumindest eine Klassifikator, die verwendet werden, Bestandteil der Datenverarbeitungsvorrichtung sein und/oder von der Datenverarbeitungsvorrichtung ausgeführte Algorithmen sein.

Gemäß einer Weiterbildung kann der zumindest eine Vorklassifikator zum Abschätzen eines ersten Parameters der Betriebssituation anhand einer ersten Anzahl von Bildern der Kameraanordnung verwendet werden, wobei mehreren verschiedenen Werten des ersten Parameters verschiedene Klassifikatoren zugeordnet sein können. Auf diese Weise kann zunächst die Art der Betriebssituation als erster Parameter abgeschätzt werden. Im nachfolgenden Schritt kann anhand des Wertes des abgeschätzten ersten Parameters der diesem Wert zugeordnete Klassifikator bestimmt werden.

Bevorzugt kann der erste Parameter des Vorklassifikators diskretwertig sein und jedem möglichen Wert des ersten Parameters höchstens ein Klassifikator zugeordnet werden.

Vorteilhaft ist es, wenn durch wenigstens einen Klassifikator dem Ergebnis einer Abschätzung, d.h. dem durch den Klassifikator abgeschätzten Betriebsparameter, ein Konfidenzniveau zugeordnet werden kann, und dass bei einem Unterschreiten eines Schwellwertes für das Konfidenzniveau der Vorklassifikator aufgerufen werden kann. Es findet somit eine Konfidenzprüfung statt, durch welche das Ergebnis des zur Bearbeitung der Teilklassifikationsaufgabe ausgewählten Klassifikator verifiziert.

Dies geschieht vorzugsweise, indem durch das Konfidenzniveau angegeben wird, mit welcher Wahrscheinlichkeit die Abschätzung des ersten Parameters durch den Vorklassifikator aus einer Anzahl von ausgewerteten Bildern für die Grundgesamtheit zutreffend ist.

Mittels des ausgewählten Klassifikators kann der zu bestimmende Betriebsparameter abgeschätzt werden.

Eine Entscheidung darüber, wann erneut eine Auswertung durch den Vorklassifikator erfolgen soll, kann im einfachsten Fall von einem menschlichen Benutzer vorgenommen werden. Einer bevorzugten Weiterentwicklung zufolge wird die Entscheidung vollautomatisch getroffen. Zu diesem Zweck ist wenigstens einer der Klassifikatoren dazu eingerichtet, das Konfidenzniveau für den abgeschätzten Betriebsparameter zu ermitteln, und die Auswerteeinheit veranlasst den Vorklassifikator, wenigstens eine neue Anzahl von Bildern auszuwerten, um den ersten Parameter neu abzuschätzen, wenn das Konfidenzniveau einen Schwellwert unterschreitet.

Bevorzugt können der zumindest eine Vorklassifikator und die Klassifikatoren anhand von betriebssituationsspezifischen Bildern trainiert werden.

Hierzu kann das Trainieren jedes Klassifikators anhand von betriebssituationsspezifischen Bildern durchgeführt werden, dessen erster Parameter jeweils den dem Klassifikator zugeordneten Wert aufweist.

Die Lernfähigkeit des zumindest einen Vorklassifikators und der Klassifikatoren kann wegen ihrer spezifischen Unterteilung vereinfacht werden. So muss jeder der Klassifikatoren nur mit Trainingsdatensätzen trainiert werden, deren Wert des ersten Parameters den dem betreffenden Klassifikator zugeordneten Wert hat. D.h. jeder einzelne Klassifikator muss nur für einen bestimmten Betriebsparameter eine brauchbare Beurteilung respektive Abschätzung liefern können, und wird folglich auch nur mit Bildern dieses Betriebsparameters trainiert. So ist ein erheblich schnelleres und sichereres Lernen möglich, als wenn mit Bildern verschiedener Betriebsparameter von unterschiedlichen Betriebssituationen trainiert werden muss.

Insbesondere kann von dem Klassifikator zum Abschätzen des Betriebsparameters eine von der ersten Anzahl von Bildern verschiedene zweite Anzahl von Bildern verwendet werden. Der zumindest eine Vorklassifikator und der vom Vorklassifikator ausgewählte Klassifikator können zwar dieselben Bilder verwenden, müssen dies aber nicht. Tatsächlich kann es zweckmäßiger sein, bei einer Kameraanordnung, die fortlaufend neue Bilder liefert, zunächst eine erste Anzahl von Bildern zu verwenden, um den Wert des ersten Parameters durch den zumindest eine Vorklassifikator abzuschätzen und anschließend den diesem Wert entsprechenden Klassifikator auszuwählen, und diesen dann auf neue Bilder anzuwenden, um den Bedarf an Speicherplatz zu minimieren.

Wenn der erste Parameter ein langsam oder selten veränderlicher Parameter ist, dann kann, wenn sein Wert einmal abgeschätzt worden ist, der auf der Grundlage dieser Abschätzung ausgewählte Klassifikator zur Auswertung einer großen Zahl von Bildern eingesetzt werden, ohne dass die Analyse durch den Vorklassifikator wiederholt werden muss. Auch dies trägt erheblich zur Reduzierung des Rechenaufwands bei. Kommt es dennoch aufgrund eines äußeren Einflusses auf die Betriebssituation zu einer signifikanten Abweichung, wird dies durch die Konfidenzprüfung detektiert. Entsprechen kann die Analyse durch den Vorklassifikator daraufhin wiederholt werden.

Bevorzugt können die Bilder nacheinander von der Kameraanordnung bereitgestellt werden.

Weiter bevorzugt kann der Wert des ersten Parameters anhand einer ersten Anzahl der Bilder abgeschätzt werden und der Schätzwert für den ersten Parameter anhand einer zweiten Anzahl der Bilder erhalten werden, die von der Kameraanordnung nach der ersten Anzahl Bilder bereitgestellt wird.

Gemäß einer bevorzugten Weiterbildung kann der zumindest eine Vorklassifikator seinerseits einen Sub-Klassifikator erster Ordnung und mehrere Sub-Klassifikatoren zweiter Ordnung verwenden, wobei mittels des Sub-Klassifikators erster Ordnung anhand einer Anzahl von Bildern der Kameraanordnung ein Wert eines zweiten Parameters abgeschätzt wird, und dass in Abhängigkeit vom abgeschätzten Wert des zweiten Parameters einer der Sub-Klassifikatoren zweiter Ordnung ausgewählt werden kann. Der erfindungsgemäße Ansatz ist auf die Arbeitsweise des Vorklassifikators selber übertragbar. Hierzu kann dieser seinerseits den Sub-Klassifikator erster Ordnung und mehrere Sub-Klassifikatoren zweiter Ordnung umfassen, wobei der Sub-Klassifikator erster Ordnung eingerichtet ist, anhand einer Anzahl von Bildern der Kameraanordnung einen Wert eines zweiten Parameters abzuschätzen. Der Vorklassifikator ist eingerichtet, einen der Sub-Klassifikatoren zweiter Ordnung anhand des abgeschätzten Werts auszuwählen. So kann etwa der Sub-Klassifikator erster Ordnung ausgelegt sein, um zwischen verschiedenen Arten von Anwendungen zu differenzieren. Beispielsweise kann durch den Sub-Klassifikator erster Ordnung zwischen den Anwendungen Bruchkornerkennung und Kornerkennung differenziert werden. Der für die daraufhin ausgewählte Anwendung, z.B., die Bruchkornerkennung, spezifische Sub-Klassifikator zweiter Ordnung kann ausgelegt sein, um zwischen verschiedenen Arten von Erntegut, wie etwa Mais, Weizen, Soja etc., zu differenzieren oder unterschiedliche Messbehältnisse zu identifizieren.

Vorzugsweise kann der von dem zumindest einen Vorklassifikator abzuschätzende erste Parameter aus einer Gruppe Erkennen einer Erntegutart, Erkennen einer Prüfvorrichtung, Erkennen von Störmaterial in einer Probe, Erkennen von ganzen Körnern in einer Probe, Erkennen von Lichtverhältnissen, Erkennen von Witterungsbedingungen, Erkennen einer aktuellen Position der landwirtschaftlichen Arbeitsmaschine ausgewählt werden.

Weiter bevorzugt kann als ein Betriebsparameter bestimmt werden, welcher sich aus einer Betriebssituation eines Be- und Verarbeitungsprozess durch die landwirtschaftliche Arbeitsmaschine, eines Be- und Verarbeitungsprozess eines Arbeitsaggregates der landwirtschaftlichen Arbeitsmaschine, eines Überlade- und Transportvorganges und/oder eines Einsatzortes der landwirtschaftlichen Arbeitsmaschine ergibt.

Insbesondere kann mittels des Klassifikators eine Bruchkornerkennung, eine Klassifikation von Störmaterial in einer Probe, eine Klassifikation von ganzen Körnern das Auftreten von Kornbesatz betreffend, eine Hinderniserkennung und/oder Hindernisklassifikation, eine Bestandsklassifikation, eine Erkennung einer Überladevorrichtung, eines Gutauswurfes und/oder eines Ladewagens durchgeführt werden.

Die diversen Klassifikatoren können jeweils ausgehend von einem gleichen ursprünglichen Klassifikator, z.B. einem generischen neuronalen Netz, bereitgestellt werden, indem jeweils ein Exemplar des ursprünglichen Klassifikators mit Bildern eines Betriebsparameters trainiert wird, dessen von dem Vorklassifikator abgeschätzter erster Parameter jeweils den dem Klassifikator zugeordneten Wert aufweist, vorzugsweise also mit Bildern eines Betriebsparameters, für die der Klassifikator später eingesetzt werden soll.

Die eingangs gestellte Aufgabe wird ferner durch eine Datenverarbeitungsvorrichtung gemäß dem Anspruch 18 gelöst.

Gemäß dem Anspruch 18 wird eine Datenverarbeitungsvorrichtung zur Bestimmung eines von einer Betriebssituation einer landwirtschaftlichen Arbeitsmaschine, insbesondere einer selbstfahrenden Erntemaschine, abhängigen Betriebsparameters als Klassifizierungsaufgabe vorgeschlagen, umfassend eine Kameraanordnung zum Erzeugen von Bilder eines Arbeitsbereiches der Arbeitsmaschine und eine mit der Kameraanordnung verbundenen Auswerteeinheit zur Bildanalyse der als Eingabedaten zugeführten Bilder, wobei die Auswerteeinheit dazu eingerichtet ist, die Klassifizierungsaufgabe in zumindest zwei Teilklassifikationsaufgaben zu zerlegen und jeder Teilklassifikationsaufgabe einen Klassifikator zuzuordnen, wobei die Auswerteeinheit zumindest einen Vorklassifikator aufweist, um durch den zumindest einen Vorklassifikator die Auswahl des anzuwendenden Klassifikators zu bestimmen.

Insbesondere können der zumindest eine Vorklassifikator und die Klassifikatoren jeweils als lernfähige KI-Systeme implementiert sein.

Die Datenverarbeitungsvorrichtung ist insbesondere zur Durchführung des Verfahrens nach einem der Ansprüche 1 bis 17 eingerichtet.

Weiterhin wird gemäß Anspruch 20 eine landwirtschaftliche Arbeitsmaschine vorgeschlagen, die eine Datenverarbeitungsvorrichtung nach einem der Ansprüche 18 oder 19 umfasst. Eine derart ausgestattete landwirtschaftliche Arbeitsmaschine ermöglich es, z.B. einem Fahrer in Echtzeit Aufschluss über einen Betriebsparameter in einer spezifischen Betriebssituation zu geben und ihm die Optimierung des Betriebsparameters und/oder weiterer Einstellparameter in dieser Betriebssituation zu erleichtern oder um eine vollautomatische Regelung des Betriebsparameters und/oder weiterer Einstellparameter zu ermöglichen.

Insbesondere kann die landwirtschaftliche Arbeitsmaschine als selbstfahrende Erntemaschine ausgeführt ist, besonders bevorzugt als selbstfahrender Mähdrescher oder selbstfahrender Feldhäcksler.

Ein Computerprogrammprodukt, welches Instruktionen umfasst, die bei Ausführung auf einer Datenverarbeitungsvorrichtung nach einem der Ansprüche 18 oder 19 diese befähigen, als Auswerteeinheit in einer landwirtschaftlichen Arbeitsmaschine nach Anspruch 20 oder 21 zu arbeiten oder das Verfahren nach einem der Ansprüche 1 bis 17 auszuführen, ist ebenfalls Gegenstand der Erfindung.

Auf die Vorteile des erfindungsgemäßen Verfahrens darf verwiesen werden.

Die vorliegende Erfindung wird nachstehend anhand eines in den Zeichnungen dargestellten Ausführungsbeispieles näher erläutert.

### Es zeigen:

- Fig. 1: eine als Mähdrescher ausgeführte landwirtschaftliche Arbeitsmaschine;
- Fig. 2: schematisierte Bilder verschiedener Maissorten als Erntegut;
- Fig. 3: ein Blockdiagramm zur Veranschaulichung einer erfindungsgemäßen Datenverarbeitungsvorrichtung ;
- Fig. 4: eine beispielhafte Darstellung eines inneren Aufbaus eines Klassifikators; und
- Fig. 5: ein Flussdiagramm zur Veranschaulichung eines erfindungsgemäßen Verfahrensablaufs.

Eine landwirtschaftliche Arbeitsmaschine 21 im Sinne der Erfindung kann bevorzugt eine selbstfahrende Erntemaschine wie ein Mähdrescher oder ein Feldhäcksler sein.

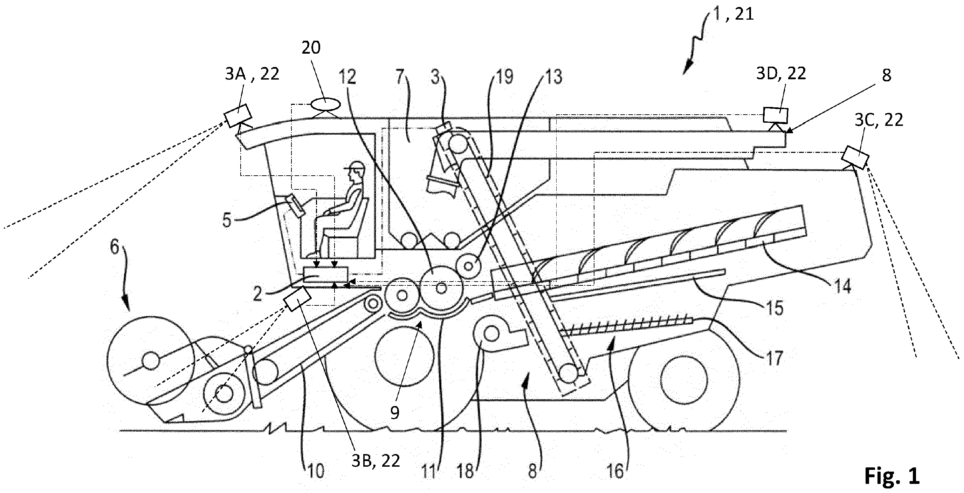

Fig. 1 zeigt eine als Mähdrescher 1 ausgeführte landwirtschaftliche Arbeitsmaschine 21 in einer schematischen, teilweise geschnittenen Seitenansicht. Der Mähdrescher 1 trägt einen austauschbaren Erntevorsatz 6 zum Schneiden und Aufnehmen des Ernteguts vom Feld. Ein Schrägförderer 10 führt das geschnittene Erntegut einer Dreschvorrichtung 9 mit von einem Dreschkorb 11 abschnittsweise ummantelten Dreschorganen 12 zu. Von dort gelangt der Erntegutstrom über eine Umlenktrommel 13 in die hier als Trennrotor ausgebildete Trenneinrichtung 14, aus der frei bewegliche Körner des Erntegutstroms nach unten abgeschieden werden. Der Strom der Körner gelangt über einen Rücklaufboden 15 zu einer Reinigungsvorrichtung 16, die wie hier dargestellt, aus mehreren Siebebenen 17 und einem Gebläse 18 besteht. Nachdem der Strom der Körner von der Reinigungsvorrichtung 16 von unerwünschten Anteilen wie Spelzen und Ährenbruchstücken befreit worden ist, gelangen die gereinigten Körner über einen Kornelevator 19 schließlich zu einem Korntank 7. Mittels einer Überladevorrichtung 8 wird das Korn auf einen Transportwagen überladen. Auf dem Mähdrescher 1 kann ein Positionsbestimmungssensor 20 angeordnet sein.

Diverse Parameter der Dreschorgane 12, der Trenneinrichtung 14 und der Reinigungsvorrichtung 16, wie etwa Geschwindigkeiten von Trommeln, Sieben und Gebläse, Spaltbreiten, etc., sind in an sich bekannter Weise durch eine Datenverarbeitungsvorrichtung 2 einstellbar, um beispielsweise den Dreschvorgang im Hinblick auf Durchsatz, Kornverlust oder Bruchkornanteil zu optimieren. So kann, um beispielsweise den Bruchkornanteil abzuschätzen, eine Kamera 3 auf den Strom der Körner, hier z.B. am Kopfende des Elevators 19, ausgerichtet sein. Die Kameraanordnung 3 liefert in regelmäßiger Folge Bilder an eine Auswerteeinheit 4 der Datenverarbeitungsvorrichtung 2. Die Kamera 3 ist Bestandteil einer Kameraanordnung 22, welche weitere Kameras 3A, 3B, 3C, 3D, die an verschiedenen Stellen des Mähdreschers 1 respektive der Erntemaschine 21 angeordnet sein können, umfassen kann, und die ebenfalls mit der mit Datenverarbeitungsvorrichtung 2 signaltechnisch verbunden sind. Der Positionsbestimmungssensor 20 übermittelt Positionsdaten an die Datenverarbeitungsvorrichtung 2. Die Datenverarbeitungsvorrichtung 2 umfasst eine Benutzerschnittstelle 5, welche einer Bedienperson des Mähdreschers 1 als Eingabe-Ausgabe-Einheit dient, um Informationen abzufragen oder angezeigt zu bekommen sowie manuell Einstellungen und/oder Vorgaben vornehmen zu können.

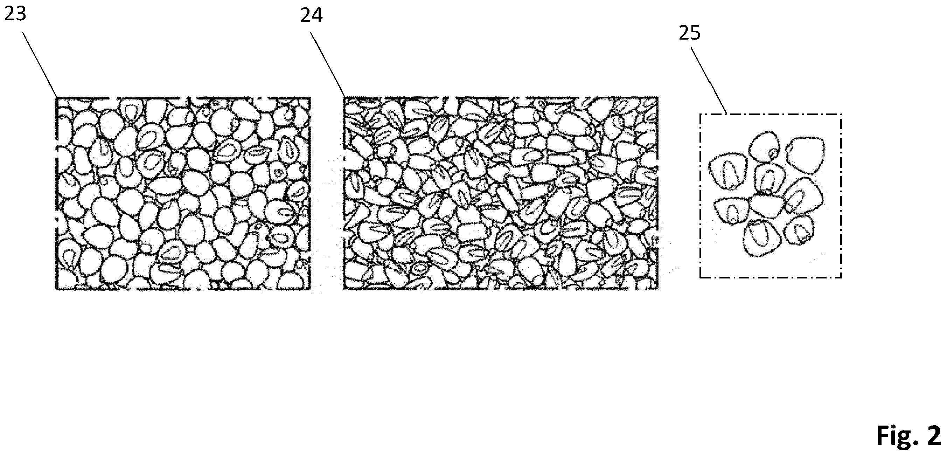

Der Erfindung liegt ein Verfahren zur Bestimmung eines von einer Betriebssituation der landwirtschaftlichen Arbeitsmaschine 21 abhängigen Betriebsparameters als Klassifizierungsaufgabe zugrunde, wobei mittels der Kameraanordnung 22 mehrere Bilder zumindest eines Arbeitsbereiches der Arbeitsmaschine 21 aufgenommen und einer mit der Kameraanordnung 22 verbundenen Auswerteeinheit 4 der Datenverarbeitungsvorrichtung 1 zur Bildanalyse als Eingabedaten zugeführt werden. Ein jeweiliger Arbeitsbereich der Arbeitsmaschine 21 kann dem des zu steuernden oder zu regelnden Arbeitsorgans entsprechen. Ein jeweiliger Arbeitsbereich kann aber auch hiervon abweichen, wenn eine Anordnung der Kamera 3, 3A, 3B, 3C, 3D der Kameraanordnung 22 in einem anderen Arbeitsbereich räumlich und/oder erfassungstechnisch sinnvoller ist. Die Klassifikationsaufgabe wird durch zumindest einen Klassifikator 27_1, 27_2, ..., 27_n bearbeitet. Eine mögliche Klassifikationsaufgabe wird beispielhaft mittels der Darstellung in Fig. 2 für das Abschätzen des Bruchkornanteils veranschaulicht. Der beispielhaft gewählten Klassifikationsaufgabe liegt die Betriebssituation Dreschen von Erntegut durch die Dreschorgane 12 zugrunde. Das Erkennen der Betriebssituation kann im einfachsten Fall durch die Auswahl der Bilddaten liefernden Kamera 3 der Kameraanordnung 22 erfolgen.

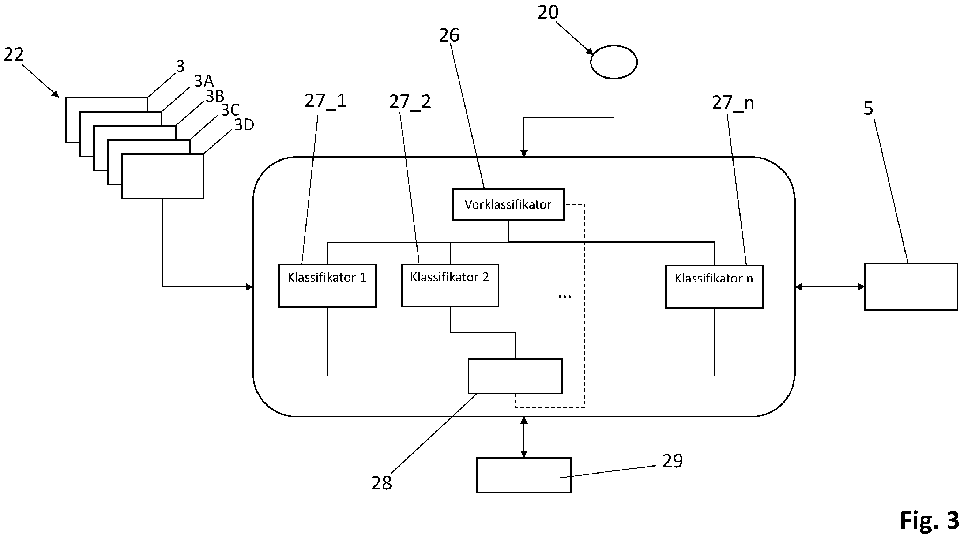

In Fig. 2 sind beispielhaft Bilder 23, 24, 25 verschiedener Maissorten als Erntegut gezeigt. Der Inhalt dieser Bilder 23, 24 ,25 ist je nach Art des Ernteguts stark unterschiedlich. Selbst bei Erntegut einer gleichen Art können sortenabhängig Unterschiede auftreten, die eine Abschätzung des enthaltenen Bruchkornanteils erschweren, wie die Bilder 23, 24, 25 anhand von verschiedenen Maissorten in Fig. 2 beispielhaft zeigen. Während bei einer ersten Maissorte im linken Bild 23 die Körner eher rundlich sind, hat eine zweite Maissorte im mittleren Bild 24 eher schlanke, kantigere Körner. Die Körner einer dritten Maissorte im rechten Bild 25 sind extrem breit. Ein anhand von Körnern der ersten oder der dritten Sorte kalibrierter Klassifikator 27_1, 27_n würde daher dazu neigen, den Bruchkornanteil in Bildern der zweiten Sorte zu überschätzen, während ein anhand der zweiten Sorte kalibrierter Klassifikator 27_2 den Bruchkornanteil für die erste und dritte Sorte unterschätzen würde. Um dieses Problem mit geringem Aufwand zu beheben, hat die Datenverarbeitungsvorrichtung 2 den in Fig. 3 gezeigten Aufbau.

In Fig. 3 ist ein vereinfachtes Blockdiagramm zur Veranschaulichung der erfindungsgemäßen Datenverarbeitungsvorrichtung 2 dargestellt. Die Auswerteeinheit 4 umfasst einen Vorklassifikator 26, auch als Klassifikator erster Ordnung bezeichnet, der mit der Kameraanordnung 22 respektive der Kamera 3 verbunden ist, um von ihr Bilder des Körnerstroms zu empfangen und anhand dieser Bilder Art und Sorte des Ernteguts zu bestimmen. Zu jeder Sorte, die der Vorklassifikator 26 zu identifizieren in der Lage ist, existiert ein sortenspezifischer Klassifikator 27_1, 27_2, ..., 27_n, auch als Klassifikator zweiter Ordnung bezeichnet, der eingerichtet ist, in Bildern von Körnern dieser Sorte den Bruchkornanteil abzuschätzen und den Schätzwert sowie ein für die Zuverlässigkeit des Schätzwerts repräsentatives Konfidenzniveau KN auszugeben. Von den Klassifikatoren 27_1, 27_2, ..., 27_n ist während des Betriebs der Datenverarbeitungsvorrichtung 2 immer nur jeweils einer aktiv, um die von der Kamera 3 gelieferten Bilder zu verarbeiten. Die anderen Klassifikatoren 27_1, 27_2, ..., 27_n sind inaktiv, um keine zusätzliche Rechenleistung der Datenverarbeitungsvorrichtung 2 für diese Klassifikationsaufgabe zu beanspruchen.

Der hier verwendete Begriff der Sorte ist mit dem von den Saatgutzüchtern verwendeten Begriff weitgehend deckungsgleich, muss es aber nicht in allen Details sein. So kann es z.B. Züchtersorten geben, die anhand des Aussehens ihrer Körner nicht auseinanderzuhalten sind, und zwischen denen der Vorklassifikator 26 folglich nicht unterscheiden kann. Andererseits kann es, wenn eine gleiche Züchtersorte je nach vorgesehener Verwendung in unterschiedlichen Reifestadien geerntet werden kann, notwendig sein, für die Reifestadien jeweils spezifische Klassifikatoren 27_1, 27_2, ..., 27_n vorzusehen.

Die Benutzerschnittstelle 5 bietet der Bedienperson des Mähdreschers 1 respektive der Arbeitsmaschine 21 die Möglichkeit, einen bestimmten Klassifikator 27_1, 27_2, ..., 27_n anzuwählen. So kann die Bedienperson, wenn ihr die auf einem Feld zu erntende Sorte bekannt ist, diese der Datenverarbeitungsvorrichtung 2 durch eine Eingabe über die Benutzerschnittstelle 5 vorgeben, damit dieses bereits vor Beginn der Ernte die diversen Betriebsparameter der Dreschvorrichtung 9 für die betreffende Sorte passend einstellen kann und eine korrekte Auswertung der Bilder von Beginn der Ernte an sichergestellt ist. Alternativ oder ergänzend kann zu demselben Zweck eine Netzwerkschnittstelle vorgesehen sein, um von einem externen Rechner - ggf. zusammen mit für autonomes Navigieren des Mähdreschers 1 auf dem Feld benötigten Daten - Angaben über Art und Sorte des Ernteguts zu empfangen.

Der Vorklassifikator 26 und die Klassifikatoren 27_1, 27_2, ..., 27_n sind jeweils als lernfähige KI-Systeme, z.B. als neuronale Netze, implementiert. Der Vorklassifikator 26 ist vom Hersteller anhand von Bildern unterschiedlicher Arten und Sorten von Erntegut darauf trainiert, Art und Sorte des Ernteguts zu identifizieren. Die Klassifikatoren 27_1, 27_2, ..., 27_n sind jeweils anhand von Bildern der für sie spezifischen Sorte darauf trainiert, den Bruchkornanteil abzuschätzen.

Eine Prüfinstanz 28 entscheidet durch Vergleich des vom aktiven Klassifikator 27_1, 27_2, ..., 27_n ausgegebenen Konfidenzniveaus KN mit einem Schwellwert SK, ob dieser für das gegenwärtig verarbeitete Erntegut geeignet ist, oder ob möglicherweise die aktuell geerntete Sorte eine andere ist als die, für die der aktive Klassifikator 27_1, 27_2, ... , 27_n ausgelegt ist. Zweckmäßigerweise basiert die Entscheidung auf einem Mitteilwert von Konfidenzniveaus KN einer Mehrzahl von jeweils jüngsten Bildern.

Wenn die Prüfinstanz 28 eine Unterschreitung des Schwellwertes SK feststellt, so aktiviert sie den Vorklassifikator 26. Wenn die Ressourcen der Datenverarbeitungsvorrichtung 2 nicht ausreichen, um den Vorklassifikator 26 und den aktiven Klassifikator 27_1, 27_2, ..., 27_n gleichzeitig zu betreiben, kann bei Aktivierung des Vorklassifikators 26 der Klassifikator 27_1, 27_2, ..., 27_n deaktiviert werden. Es stehen dann zwar eine Zeitlang keine aktuellen Daten zu Bruchkornanteil zur Verfügung, doch ist dies nicht weiter störend, solange deren Konfidenzniveau KN niedrig ist und es dementsprechend ungewiss ist, ob eine anhand des ermittelten Bruchkornanteils vorgenommene Verstellung von Dreschwerkparametern tatsächlich zu einer Verbesserung des Dreschergebnisses führen würde.

Der Vorklassifikator 26 verwendet die aktuell von der Kamera 3 der Kameraanordnung 22 gelieferten Bilder, um Art und Sorte des Ernteguts zu ermitteln. Es können hierfür solange Bilder gesammelt werden, bis eine Entscheidung mit dem nötigen Konfidenzlevel KN getroffen werden kann. Sobald die Entscheidung getroffen ist, wird der der identifizierten Sorte zugeordnete Klassifikator 27_1, 27_2, ..., 27_n aktiviert und der Vorklassifikator 26 deaktiviert.

Die Datenverarbeitungsvorrichtung 2 umfasst ferner eine Steuereinheit 29, die die vom jeweils aktiven Klassifikator 27_1, 27_2, ..., 27_n ermittelten Bruchkornanteile empfängt und anhand von diesen und ggf. Messdaten weiterer Sensoren die Betriebsparameter der Dreschvorrichtung 9 zu optimieren. Alternativ oder ergänzend kann die Benutzerschnittstelle 5 vorgesehen sein, um der Bedienperson die ermittelten Bruchkornanteile anzuzeigen und ihr zu ermöglichen, Anpassungen an den Betriebsparametern der Dreschvorrichtung 9 vorzunehmen.

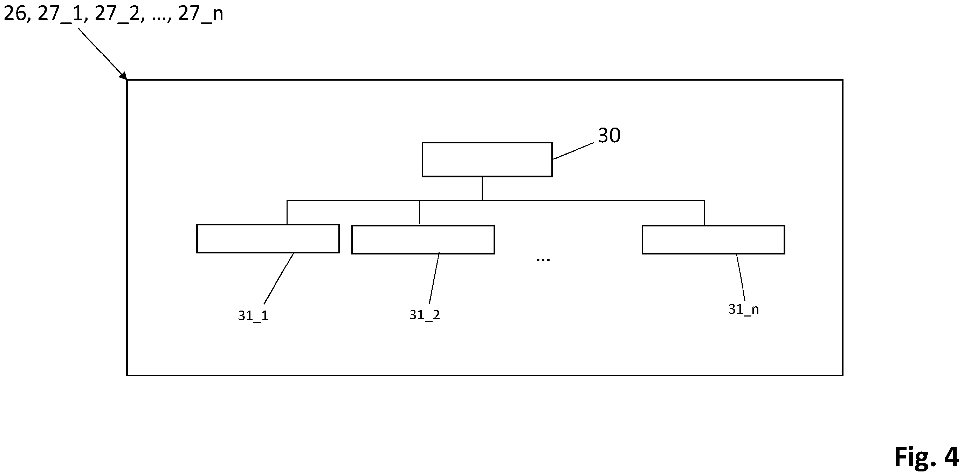

Der erfindungsgemäße Ansatz, ein komplexes Klassifikationsproblem in Teilprobleme zu zerlegen, die jeweils von einfachen, wenig rechenintensiven und mit kleinen Datenmengen effizient trainierbaren Klassifikatoren gehandhabt werden können, ist in verschiedener Hinsicht erweiterbar. Grundsätzlich kann jeder der Vorklassifikatoren 26 und der Klassifikatoren 27_1, 27_2, ..., 27_n einen inneren Aufbau haben, der dem in Fig. 3 gezeigten ähnlich ist. Beispielsweise kann auch das Problem der Sortenidentifikation vereinfacht werden, indem der Vorklassifikator 26 in einen Sub-Klassifikator 30 erster Ordnung zum Identifizieren der Art des Ernteguts und in Sub-Klassifikatoren 31_1, 31_2, ..., 31_n zweiter Ordnung zum Identifizieren der Sorte zerlegt wird, wie in Fig. 4 allgemein veranschaulicht.

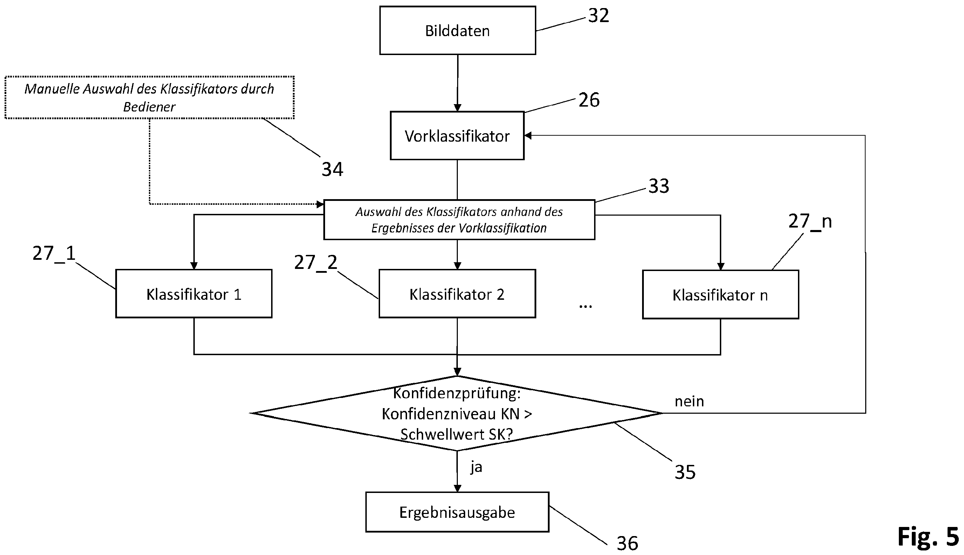

In Fig. 5 ist ein verallgemeinertes Flussdiagramm zur Veranschaulichung des erfindungsgemäßen Verfahrensablaufs dargestellt. Im Schritt 32 werden Bilddaten von der Kameraanordnung 22 an den Vorklassifikator 26 übermittelt. Der Vorklassifikator 26 trifft im Schritt 33 die Auswahl eines Klassifikators 27_1, 27_2, ..., 27_n, mit welchem die Abschätzung zur Bestimmung eines von einer Betriebssituation einer landwirtschaftlichen Arbeitsmaschine 21, insbesondere selbstfahrenden Erntemaschine, abhängigen Betriebsparameters durchgeführt wird. Die im Schritt 35 ausgeführte Konfidenzprüfung durch die Prüfinstanz 28 überwacht die Einhaltung des Konfidenzniveaus KN. Beim Überschreiten des Schwellwertes SK wird vor den Schritt 33 zurückgesprungen, um durch den Vorklassifikator 26 eine erneute Auswertung von Bildern vorzunehmen, um einen passenderen Klassifikator 27_1, 27_2, ..., 27_n auszuwählen. Grundsätzlich ist es in einem Schritt 34 möglich, die von dem Vorklassifikator getroffene Auswahl des Klassifikator 27_1, 27_2, ..., 27_n manuell abzuändern oder bestätigen zu lassen. Ist die im Schritt 35 ausgeführte Konfidenzprüfung positiv, d.h. das Konfidenzniveau KN liegt unterhalb des Schwellwertes SK wird im Schritt 36 das Ergebnis ausgegeben.

Wie bereits weiter oben angedeutet, ist die Bruchkornerkennung nur ein beispielhafter Anwendungsfall. Prinzipiell kann als ein Betriebsparameter ein jeder Betriebsparameter bestimmt werden, welcher sich aus einer spezifischen Betriebssituation eines Be- und Verarbeitungsprozess durch die landwirtschaftliche Arbeitsmaschine 21, eines Be- und Verarbeitungsprozess eines der Arbeitsaggregate der landwirtschaftlichen Arbeitsmaschine 21, eines Überlade- und Transportvorganges und/oder eines Einsatzortes der landwirtschaftlichen Arbeitsmaschine 21 ergibt. Aus der jeweiligen Betriebssituation der Arbeitsmaschine 21 lassen sich verschiedene Anwendungsfälle ableiten, aus denen sich eine Klassifikationsaufgabe ergibt, die in zumindest zwei Teilklassifikationsaufgaben zerlegt wird, wobei jeder Teilklassifikationsaufgabe ein Klassifikator 27_1, 27_2, ..., 27_n zugeordnet wird, wobei durch den zumindest einen Vorklassifikator 26 die Auswahl des anzuwendenden Klassifikators 27_1, 27_2, ..., 27_n bestimmt wird.

Der zumindest eine Vorklassifikator 26 kann zum Abschätzen eines ersten Parameters der Betriebssituation anhand einer ersten Anzahl von Bildern der Kameraanordnung 22 verwendet werden, wobei mehreren verschiedenen Werten des ersten Parameters verschiedene Klassifikatoren 27_1, 27_2, ..., 27_n zugeordnet sind. Der erste Parameter des Vorklassifikators 26 ist vorzugsweise diskretwertig. Jedem möglichen Wert des ersten Parameters wird höchstens ein Klassifikator 27_1, 27_2, ..., 27_n zugeordnet. Durch das Konfidenzniveau KN kann angegeben werden, mit welcher Wahrscheinlichkeit die Abschätzung des ersten Parameters aus einer Anzahl von ausgewerteten Bildern für die Grundgesamtheit zutreffend ist. Mittels des ausgewählten Klassifikators 27_1, 27_2, ..., 27_n kann der zu bestimmende Betriebsparameter abgeschätzt werden.

Gemäß dem erfindungsgemäßen Verfahren kann der zumindest eine Vorklassifikator 26 seinerseits einen Sub-Klassifikator 30 erster Ordnung und mehrere Sub-Klassifikatoren 31_1, 31_2, ..., 31_n zweiter Ordnung verwenden, wobei mittels des Sub-Klassifikators 30 erster Ordnung anhand einer Anzahl von Bildern der Kameraanordnung 22 ein Wert eines zweiten Parameters abgeschätzt werden kann. In Abhängigkeit vom abgeschätzten Wert des zweiten Parameters kann einer der Sub-Klassifikatoren 31_1, 31_2, ..., 31_n zweiter Ordnung ausgewählt werden.

Hierbei kann der von dem Vorklassifikator 26 abgeschätzte erste Parameter aus einer Gruppe Erkennen einer Erntegutart, Erkennen einer Prüfvorrichtung, Erkennen von Störmaterial in einer Probe, Erkennen von ganzen Körnern in einer Probe, Erkennen von Lichtverhältnissen, Erkennen von Witterungsbedingungen, Erkennen einer aktuellen Position der landwirtschaftlichen Arbeitsmaschine 21 ausgewählt werden.

Mittels des ausgewählten Klassifikators 27_1, 27_2, ..., 27_n kann die Bruchkornerkennung - wie weiter oben bereits beispielhaft beschrieben-, eine Klassifikation von Störmaterial in einer Probe, eine Klassifikation von ganzen Körnern das Auftreten von Kornbesatz betreffend, eine Hinderniserkennung und/oder Hindernisklassifikation, eine Bestandsklassifikation, eine Erkennung einer Überladevorrichtung, eines Gutauswurfes und/oder eines Ladewagens durchgeführt werden.

Das Erkennen der Erntegutart als solcher als erster Parameter durch den Vorklassifikator 26 kann mittels des Sub-Klassifikators 30 erster Ordnung erfolgen. Die Sub-Klassifikatoren 31_1, 31_2, ..., 31_n zweiter Ordnung können daraufhin innerhalb der durch den Sub-Klassifikator 30 bestimmten Erntegutart die jeweilige Sorte bestimmen, für welche die Bruchkornerkennung durchgeführt werden soll.

Ein weiteres Bespiel ist das Erkennen einer spezifischen Prüfvorrichtung für die Bruchkornbestimmung als erster Parameter durch den Vorklassifikator 26. Hierbei kann mittels einer mobilen Kamera, beispielsweise eines Mobilfunktelefons eine Aufnahme der Prüfvorrichtung gemacht werden, welche an die Datenverarbeitungsvorrichtung zur Auswertung übertragen wird. Durch den Vorklassifikator 26 kann die Art der Prüfvorrichtung, z.B. eine Feiffer-Schale, als eine Teilklassifikationsaufgabe identifiziert werden.

Das von dem Vorklassifikator 26 bestimmte Ergebnis wird dann Durchführung der Bruchkornerkennung als zweite Teilklassifikationsaufgabe durch den ausgewählten Klassifikator 27_1, 27_2, ..., 27_n verwendet.

Ein weiterer sich aus der Betriebssituation eines Be- und Verarbeitungsprozess durch die landwirtschaftliche Arbeitsmaschine 21 ergebender Betriebsparameter ist beispielsweise die Kornerkennung zur Bestimmung der Kornqualität des im Korntank 7 gebunkerten Korns. Mittels des Vorklassifikators 26 kann das Erkennen des Vorhandenseins von Störmaterial in einer Probe und/oder das Erkennen von ganzen Körnern in einer Probe als eine Teilklassifikationsaufgabe durchgeführt werden. Das Ergebnis der Teilklassifikationsaufgabe Erkennen von Störmaterial in der Probe durch den Vorklassifikators 26 führt zur Auswahl des zu verwendenden Klassifikators 27_1, 27_2, ..., 27_n, mit welchem die Klassifikation des vorhandenen Störmaterials in der Probe durchgeführt wird. Das Ergebnis der Teilklassifikationsaufgabe Erkennen von ganzen Körnern in der Probe führt zur Auswahl des zu verwendenden Klassifikators 27_1, 27_2, ..., 27_n, mit welchem eine Klassifikation von ganzen Körnern das Auftreten von Kornbesatz betreffend durchgeführt wird. Hierzu zählt unter anderem das Auftreten von Schmachtkorn, Körner mit Auswuchs, Fremdgetreide, Körner mit Keimverfärbungen und durch Trocknung überhitzte Körner.

Eine weitere Betriebssituation ist das Bewegen der Arbeitsmaschine 21 auf dem Feld, was mit einer Umfelderkennung einhergeht, beispielsweise durch die Vorfeldkamera 3A an der Kabine der Arbeitsmaschine 21 oder die Kamera 3D an der Überladevorrichtung. Ebenso zählt der Vorgang des Überladens von Erntegut auf einen Transportwagen dazu. Mittels des Vorklassifikators 26 kann das Erkennen von Lichtverhältnissen und/oder das Erkennen von Witterungsbedingungen als erster Parameter durchgeführt werden. Spezifische Witterungsbedingungen und/oder Lichtverhältnisse wie Schnee, Nebel, Sonnenschein, Gegenlicht und dergleichen mehr, lassen sich mittels des Sub-Klassifikators 30 erster Ordnung und der Sub- Klassifikatoren 31_1, 31_2, ..., 31_n zweiter Ordnung bestimmen. So kann beispielsweise entsprechend der durch den Vorklassifikator 26 bestimmten Lichtverhältnisse ein geeigneter Klassifikator 27_1, 27_2, ..., 27_n für die Hinderniserkennung oder für eine Bestandsklassifikation in einem Lager ausgewählt werden. Bei der Hinderniserkennung wäre der zu bestimmende Betriebsparameter ein Steuerbefehl, um auf ein erkanntes Hindernis zu reagieren. Durch den Vorklassifikator 26 bestimmte spezifische Witterungsbedingungen kommen ebenfalls bei der Hinderniserkennung als durch den ausgewählten Klassifikator 27_1, 27_2, ..., 27_n zu bearbeitende Teilklassifikationsaufgabe zur Anwendung.

Ein weiterer Anwendungsfall besteht beim Überladen des Erntegutes auf einen Transportwagen als Betriebssituation. Der Betriebsparameter ist das Ausrichten und Beibehalten der Überladevorrichtung 8 auf einen Auftreffpunkt in dem Transportwagen, was sowohl im Stillstand als auch während der Fahrt der Arbeitsmaschine 21 erfolgen kann. Letzteres ist insbesondere bei einem selbstfahrenden Feldhäcksler als Arbeitsmaschine 1 der Fall. Mittels des Vorklassifikators 26 erkannte Lichtverhältnisse und/oder Witterungsbedingungen als erster Parameter dienen der Auswahl des Klassifikators 27_1, 27_2, ..., 27_n, mit welchem das Erkennen der Position des Gutauswurfs der Überladevorrichtung, die Art und/oder Position des Überladewagens, als mögliche teilklassifikationsaufgaben durchgeführt werden.

Die Kamera 3B der Kameraanordnung 22 kann Bilder aus dem Erntevorsatz 6 bereitstellen, die zu dessen optimierter Einstellung herangezogen werden können. Die im rückwärtigen Bereich des Mähdreschers 1 angeordnete Kamera 3C kann beispielsweise der Analyse des auf den Boden ausgebrachten Erntegutes dienen. Insbesondere kann mittels der Kamera 3C zumindest anteilig eine Bestimmung von Erntegutverlusten durchgeführt werden.

Zusätzlich zu den Bilddaten können Signale des Positionsbestimmungssensors 20 von dem Vorklassifikator 26 verwendet werden, um den Klassifikator 27_1, 27_2, ..., 27_n auszuwählen. Hintergrund ist hierbei, dass das Erntegut regional unterschiedlich aussehen kann. So kann der Sub-Klassifikator 30 erster Ordnung mittels der Positionsdaten zunächst den Ort bestimmen, an welchem sich die Arbeitsmaschine 21 befindet, um dann einen geeigneten Sub-Klassifikator 31_1, 31_2, ..., 31_n zweiter Ordnung zum Identifizieren der Erntegutart auszuwählen.

**Bezugszeichenliste**

| | | | |
|---|---|---|---|
| 1 | Mähdrescher | 28 | Prüfinstanz |
| 2 | Datenverarbeitungsvorrichtung | 29 | Steuereinheit |
| 3 | Kamera | 30 | Sub-Klassifikator erster Ordnung |
| 3A | Kamera | 31_1 | Sub-Klassifikator zweiter Ordnung |
| 3B | Kamera | 31_2 | Sub-Klassifikator zweiter Ordnung |
| 3C | Kamera | 31_n | Sub-Klassifikator zweiter Ordnung |
| 3D | Kamera | 32 | Schritt |
| 4 | Auswerteeinheit | 33 | Schritt |
| 5 | Benutzerschnittstelle | 34 | Schritt |
| 6 | Erntevorsatz | 35 | Schritt |
| 7 | Korntank | 36 | Schritt |
| 8 | Überladevorrichtung | | |
| 9 | Dreschvorrichtung | KN | Konfidenzniveau |
| 10 | Schrägförderer | SK | Schwellwert |
| 11 | Dreschkorb | | |
| 12 | Dreschorgan | | |
| 13 | Umlenktrommel | | |
| 14 | Trenneinrichtung | | |
| 15 | Rücklaufboden | | |
| 16 | Reinigungsvorrichtung | | |
| 17 | Siebebene | | |
| 18 | Gebläse | | |
| 19 | Elevator | | |
| 20 | Positionsbestimmungssensor | | |
| 21 | Arbeitsmaschine | | |
| 22 | Kameraanordnung | | |
| 23 | Bild | | |
| 24 | Bild | | |
| 25 | Bild | | |
| 26 | Vorklassifikator | | |
| 27_1 | Klassifikator | | |
| 27_2 | Klassifikator | | |
| 27_n | Klassifikator | | |

## Patentansprüche

1. Verfahren zur Bestimmung eines von einer Betriebssituation einer landwirtschaftlichen Arbeitsmaschine(21), insbesondere selbstfahrenden Erntemaschine (1), abhängigen Betriebsparameters als Klassifizierungsaufgabe, wobei mittels einer Kameraanordnung (22) Bilder (23, 24, 25) zumindest eines Arbeitsbereiches der Arbeitsmaschine (21) aufgenommen und einer mit der Kameraanordnung (22) verbundenen Auswerteeinheit (4) einer Datenverarbeitungsvorrichtung (2) zur Bildanalyse als Eingabedaten zugeführt werden, **dadurch gekennzeichnet, dass** die Klassifizierungsaufgabe in zumindest zwei Teilklassifikationsaufgaben zerlegt wird, wobei jeder Teilklassifikationsaufgabe ein Klassifikator (27_1, 27_2, ..., 27_n) zugeordnet wird, wobei durch zumindest einen Vorklassifikator (26) die Auswahl des anzuwendenden Klassifikators (27_1, 27_2, ..., 27_n) bestimmt wird.

2. Verfahren nach Anspruch 1, **dadurch gekennzeichnet, dass** der zumindest eine Vorklassifikator (26) und der zumindest eine Klassifikator (27_1, 27_2, ..., 27_n), die verwendet werden, Bestandteil der Datenverarbeitungsvorrichtung (2) sind und/oder von der Datenverarbeitungsvorrichtung (2) ausgeführte Algorithmen sind.

3. Verfahren nach Anspruch 1 oder 2, **dadurch gekennzeichnet, dass** der zumindest eine Vorklassifikator (26) zum Abschätzen eines ersten Parameters der Betriebssituation anhand einer ersten Anzahl von Bildern (23, 24, 25) der Kameraanordnung (22) verwendet wird, wobei mehreren verschiedenen Werten des ersten Parameters verschiedene Klassifikatoren (27_1, 27_2, ..., 27_n) zugeordnet sind.

4. Verfahren nach Anspruch 3, **dadurch gekennzeichnet, dass** der erste Parameter des Vorklassifikators (26) diskretwertig ist und jedem möglichen Wert des ersten Parameters höchstens ein Klassifikator (27_1, 27_2, ..., 27_n) zugeordnet wird.

5. Verfahren nach einem der vorangehenden Ansprüche, **dadurch gekennzeichnet, dass** durch wenigstens einen Klassifikator (27_1, 27_2, ..., 27_n) dem Ergebnis einer Abschätzung ein Konfidenzniveau (KN) zugeordnet wird, und dass bei einem Unterschreiten eines Schwellwertes (SK) für das Konfidenzniveau (KN) der Vorklassifikator (26) aufgerufen wird.

6. Verfahren nach Anspruch 5, **dadurch gekennzeichnet, dass** durch das Konfidenzniveau (KN) angegeben wird, mit welcher Wahrscheinlichkeit die Abschätzung des ersten Parameters aus einer Anzahl von ausgewerteten Bildern für die Grundgesamtheit zutreffend ist.

7. Verfahren nach einem der vorangehenden Ansprüche, **dadurch gekennzeichnet, dass** mittels des ausgewählten Klassifikators (27_1, 27_2, ..., 27_n) der zu bestimmende Betriebsparameter abgeschätzt wird.

8. Verfahren nach einem der vorangehenden Ansprüche, **dadurch gekennzeichnet, dass** der zumindest eine Vorklassifikator (26) und die Klassifikatoren (27_1, 27_2, ..., 27_n) anhand von betriebssituationsspezifischen Bildern trainiert werden.

9. Verfahren nach Anspruch 8, **dadurch gekennzeichnet, dass** das Trainieren jedes Klassifikators (27_1, 27_2, ..., 27_n) anhand von betriebssituationsspezifischen Bildern durchgeführt wird, dessen erster Parameter jeweils den dem Klassifikator (27_1, 27_2, ..., 27_n) zugeordneten Wert aufweist.

10. Verfahren nach einem der vorangehenden Ansprüche, **dadurch gekennzeichnet, dass** von dem Klassifikator (27_1, 27_2, ..., 27_n) zum Abschätzen des Betriebsparameters eine von der ersten Anzahl von Bildern verschiedene zweite Anzahl von Bildern verwendet wird.

11. Verfahren nach einem der vorangehenden Ansprüche, **dadurch gekennzeichnet, dass** die Bilder nacheinander von der Kameraanordnung (22) bereitgestellt werden.

12. Verfahren nach Anspruch 11, **dadurch gekennzeichnet, dass** der Wert des ersten Parameters anhand einer ersten Anzahl der Bilder abgeschätzt wird und der Schätzwert für den ersten Parameter anhand einer zweiten Anzahl der Bilder erhalten wird, die von der Kameraanordnung (22) nach der ersten Anzahl Bilder bereitgestellt wird.

13. Verfahren nach einem der vorangehenden Ansprüche, **dadurch gekennzeichnet, dass** der zumindest eine Vorklassifikator (26) seinerseits einen Sub-Klassifikator (30) erster Ordnung und mehrere Sub-Klassifikatoren (31_1, 31_2, ..., 31_n)zweiter Ordnung verwendet, wobei mittels des Sub-Klassifikators (30) erster Ordnung anhand einer Anzahl von Bildern der Kameraanordnung (2) ein Wert eines zweiten Parameters abgeschätzt wird, und dass in Abhängigkeit vom abgeschätzten Wert des zweiten Parameters einer der Sub-Klassifikatoren (31_1, 31_2, ..., 31_n) zweiter Ordnung ausgewählt wird.

14. Verfahren nach einem der Ansprüche 3 bis 13, **dadurch gekennzeichnet, dass** der erste Parameter aus einer Gruppe Erkennen einer Erntegutart, Erkennen einer Prüfvorrichtung, Erkennen von Störmaterial in einer Probe, Erkennen von ganzen Körnern in einer Probe, Erkennen von Lichtverhältnissen, Erkennen von Witterungsbedingungen, Erkennen einer aktuellen Position der landwirtschaftlichen Arbeitsmaschine ausgewählt wird.

15. Verfahren nach einem der vorangehenden Ansprüche, **dadurch gekennzeichnet, dass** als ein Betriebsparameter bestimmt wird, welcher sich aus einer Betriebssituation eines Be- und Verarbeitungsprozess durch die landwirtschaftliche Arbeitsmaschine (21), eines Be- und Verarbeitungsprozess eines Arbeitsaggregates (6, 8, 9, 14) der landwirtschaftlichen Arbeitsmaschine (21), eines Überlade- und Transportvorganges und/oder eines Einsatzortes der landwirtschaftlichen Arbeitsmaschine (21) ergibt.

16. Verfahren nach einem der vorangehenden Ansprüche, **dadurch gekennzeichnet, dass** mittels des Klassifikators (27_1, 27_2, ..., 27_n) eine Bruchkornerkennung, eine Klassifikation von Störmaterial in einer Probe, eine Klassifikation von ganzen Körnern das Auftreten von Kornbesatz betreffend, eine Hinderniserkennung und/oder Hindernisklassifikation, eine Bestandsklassifikation, eine Erkennung einer Überladevorrichtung (8), eines Gutauswurfes und/oder eines Ladewagens durchgeführt wird.

17. Verfahren nach einem der vorangehenden Ansprüche, **dadurch gekennzeichnet, dass** der Klassifikator (27_1, 27_2, ..., 27_n) durch eine manuelle Auswahl vorgegeben wird.

18. Datenverarbeitungsvorrichtung (2) zur Bestimmung eines von einer Betriebssituation einer landwirtschaftlichen Arbeitsmaschine (21), insbesondere selbstfahrenden Erntemaschine (1), abhängigen Betriebsparameters als Klassifizierungsaufgabe, umfassend eine Kameraanordnung (22) zum Erzeugen von Bilder eines Arbeitsbereiches der Arbeitsmaschine (21) und eine mit der Kameraanordnung (22) verbundenen Auswerteeinheit (4) zur Bildanalyse der als Eingabedaten zugeführten Bilder, **dadurch gekennzeichnet, dass** die Auswerteeinheit (3) dazu eingerichtet ist, die Klassifizierungsaufgabe in zumindest zwei Teilklassifikationsaufgaben zu zerlegen und jeder Teilklassifikationsaufgabe einen Klassifikator (27_1, 27_2, ..., 27_n) zuzuordnen, wobei die Auswerteeinheit (4) zumindest einen Vorklassifikator (26) aufweist, um durch den zumindest einen Vorklassifikator (26) die Auswahl des anzuwendenden Klassifikators (27_1, 27_2, ..., 27_n) zu bestimmen.

19. Datenverarbeitungsvorrichtung (2) nach Anspruch 18, **dadurch gekennzeichnet, dass** der zumindest eine Vorklassifikator (26) und die Klassifikatoren (27_1, 27_2, ..., 27_n) jeweils als lernfähige KI-Systeme implementiert sind.

20. Landwirtschaftliche Arbeitsmaschine (21), umfassend eine Datenverarbeitungsvorrichtung (2) nach einem der Ansprüche 18 oder 19.

21. Landwirtschaftliche Arbeitsmaschine (21), **dadurch gekennzeichnet, dass** diese als selbstfahrende Erntemaschine ausgeführt ist, insbesondere als Mähdrescher (1) oder Feldhäcksler.

22. Computerprogrammprodukt, welches Instruktionen umfasst, die bei Ausführung auf einer Datenverarbeitungsvorrichtung (2) nach einem der Ansprüche 18 oder 19 diese befähigen, als Auswerteeinheit (4) in einer landwirtschaftlichen Arbeitsmaschine (21) nach Anspruch 20 oder 21 zu arbeiten oder das Verfahren nach einem der Ansprüche 1 bis 17 auszuführen.
